**Europäisches Patentamt**

**European Patent Office**

**Office européen des brevets**

(19)

(11) Publication number : **0 278 934 B1**

(12) # EUROPEAN PATENT SPECIFICATION

(45) Date of publication of patent specification :
**22.01.92 Bulletin 92/04**

(51) Int. Cl.⁵ : **F16B 15/08**

(21) Application number : **88850036.0**

(22) Date of filing : **01.02.88**

(54) Collated fasteners.

(30) Priority : **06.02.87 US 12099**

(43) Date of publication of application :
**17.08.88 Bulletin 88/33**

(45) Publication of the grant of the patent :
**22.01.92 Bulletin 92/04**

(84) Designated Contracting States :
**AT BE CH DE ES FR GB GR IT LI LU NL SE**

(56) References cited :
**AT-B- 345 623**
**DE-A- 2 319 374**
**DE-A- 2 756 494**
**GB-A- 1 296 456**
**US-A- 4 755 091**

(73) Proprietor : **STAR FASTENERS
INTERNATIONAL, INC.
23 East Charlton Street Suite 2C
Savannah - GA 31401 (US)**

(72) Inventor : **Potucek, Frank R.
6111 28th Street East
Bradenton, Florida 34203 (US)**

(74) Representative : **Ström, Tore et al
Ström & Gulliksson AB Studentgatan 1 P.O.
Box 4188
S-203 13 Malmö (SE)**

## Description

### Background of the Invention

1. Field of the Invention.

This invention relates to fasteners. More particularly, it refers to fasteners usable in a collated strip for hammer tools.

2. Prior Application.

The fasteners used with this invention relate to prior fasteners shown in co-pending U.S. Application Serial No. 721,757, filed on April 10, 1985.

3. Description of the Prior Art.

There are many types of collated fasteners in use including the common and finishing smooth shank nails and the ring shank nail for increased holding power beyond that of a common round nail. Such fasteners require some tape or wire to interconnect the nails into a collated strip. None of such fasteners is self-interconnecting or locking to form a collated strip of self-contained fasteners. Many of the fasteners of the prior art are furthermore wasteful, being fabricated from an excess of steel, aluminum or other metals, such excess being of increasing importance as a competitive consideration.

DE-A-2 319 374 discloses a plurality of fasteners collated together in a strip in a side by side relationship for use in a fastener tool, each fastener comprising :

(a) an elongated shank having a flat head at a first and a point at a second end,

(b) an annular edge circumscribing the flat head with a cut out on the edge.

### Summary of The Invention

The collated fasteners in accord with this invention overcome many of the aforementioned problems of the prior art as will be readily understood by consideration of the entire specification, drawings and claims herein.

My collated fasteners are a plurality of fasteners having an elongated shank and an enlarged flattened head integral with one end of the shank. The shank in the preferred fastener has a central core with ten spaced side walls radially extending from the core, the walls conforming substantially in length with the length of the shank and forming at least a five-pointed star in cross section. The head has a slot with an entrance at the rim of the head which rides on a converging pair of side walls forming a star point in an adjacent fastener. One converging pair of sidewalls has a notch adjacent the head for slidable engagement with the slot in the head of the adjacent fastener. A blow to the head of one fastener causes disengagement from the notch and movement of the fastener along the length of the converging sidewalls of the adjacent fastener.

### Brief Description of the Drawings

The invention as to its organization and method of operation may be best understood by those having ordinary skill in the art by reference to the following description taken in connection with the accompanying drawings, in which:

Fig. 1 is an isometric view of a collated strip of fasteners in the form of nails;

Fig. 2 is a plan view of the collated nails of Fig. 1;

Fig. 3 is a plan view similar to Fig. 2 showing a modification of the slot in the head;

Fig. 4 is an enlarged side elevational view of a part of the strip of Fig. 1 showing the locking feature between the fasteners;

Fig. 5 is an enlarged side elevational view of fasteners showing an alternate position of the locking feature between fasteners;

Fig. 6 is a plan view of a quick fall away nail;

Fig. 7 is an isometric view of a single collatable fastener in the form of a star shaped nail;

Fig. 8 is an enlarged cross-sectional view taken along line 7--7 of Fig. 7 and showing the star shaped fastener driven into wood;

Fig. 9 is an enlarged cross-sectional view similar to Fig. 8 and depicting alternative embodiments of a fastener used in the invention;

Fig. 10 is a cross-sectional view taken along line 9--9 of Fig. 9;

Fig. 11 is an enlarged partial side view of the fastener of Fig. 9 showing serrations in the cups;

Fig. 12 is a partial side elevational view of a fastener used in the invention;

Fig. 13 is a partial cross-sectional view of the fastener of Fig. 12 taken along a plane through the shank thereof equidistant of a pair of edges;

Fig. 14 is a plan view of a collated strip of roofing nails having an alternate head configuration;

Fig. 15 is an isometric view of a collated strip of the improved common nails having an offset shank;

Fig. 16 is an isometric view of a collated strip of roofing nails;

Fig. 17 is a plan view of the improved nail of Fig. 15;

Fig. 18 is a plan view similar to Fig. 17 and showing a modification of the head thereof;

Fig. 19 is a plan view of a coil of roofing nails; and

Fig. 20 is an enlarged partial side view of an alternate quick fall away notch employed with collated fasteners as also seen in Fig. 6.

Fig 21 is a plan view of a roofing nail having three radially protruding fins.

Description of The Preferred Embodiment

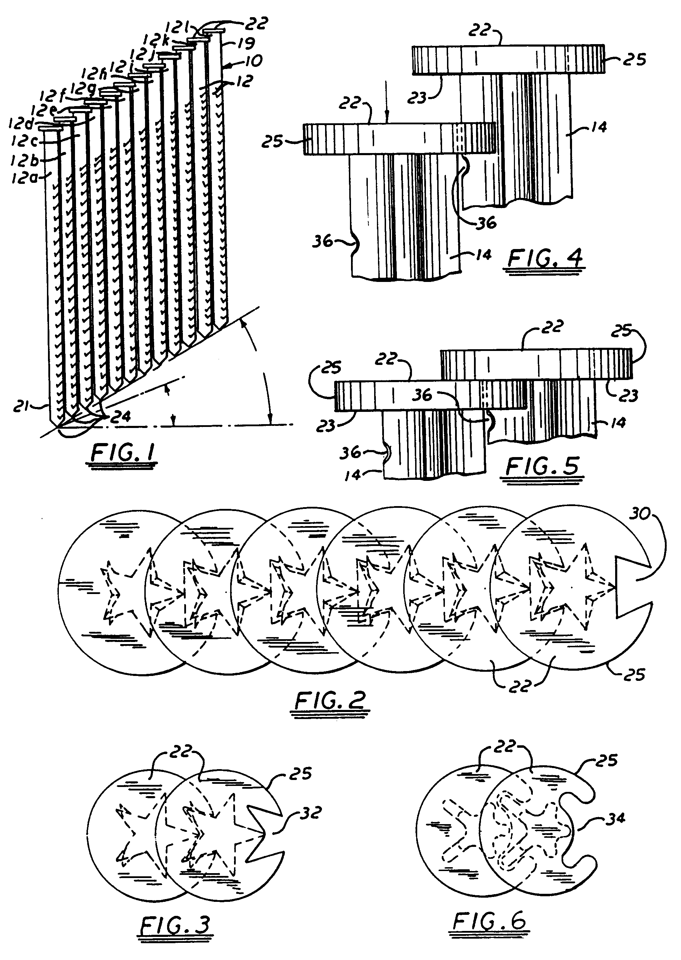

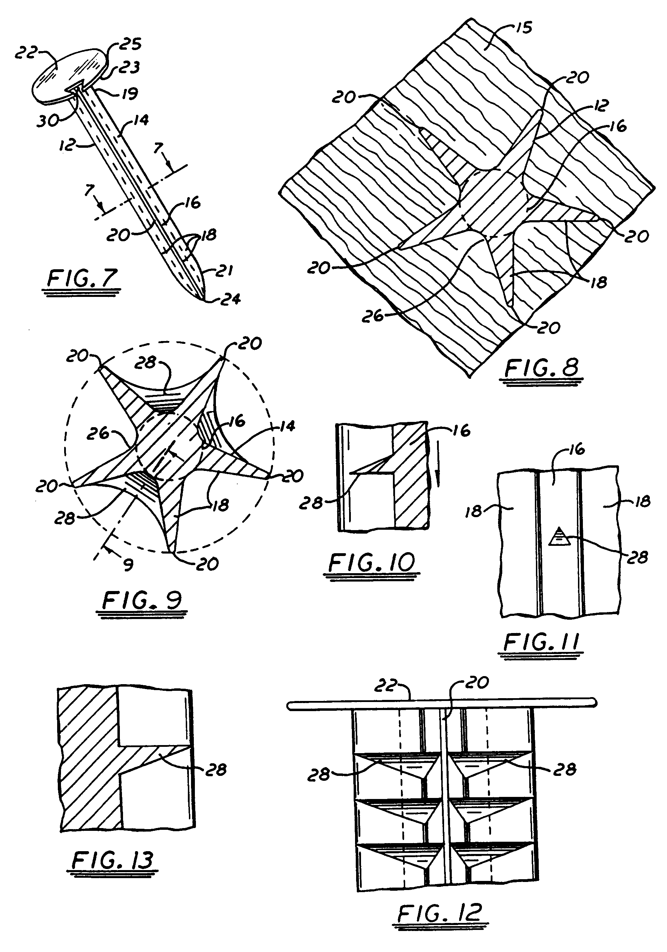

The collated fastener unit 10 shown in Fig. 1 contains a plurality of identical fasteners 12 shown in Fig. 7. Each fastener 12 has an elongated shank 14, an elongated central core 16, five elongated radially protruding fins 18 from core 16 and an outer edge 20 on each fin 18. The fastener may have as few as three fins and as many as eleven.

As shown in Figs. 8 and 9, the cross-section of the shank 14 appears as star-shaped since each of the fins 18 taper from the core 16 outwardly to a rounded edge 20 at a point farthest from the core 16.

As seen in Fig. 7, a flat head 22 and point 24 of fastener 12 terminate each end of the shank 14. Shank 14 terminates at its first end 19 at the bottom 23 of head 22. The second end 21 of the shank terminates in point 24. The space between adjacent fins 18 forms a cup 26 which in an alternate embodiment shown in Fig. 9 contains serrations 28 for greater holding resistance when the fastener 12 is inserted into wood 15.

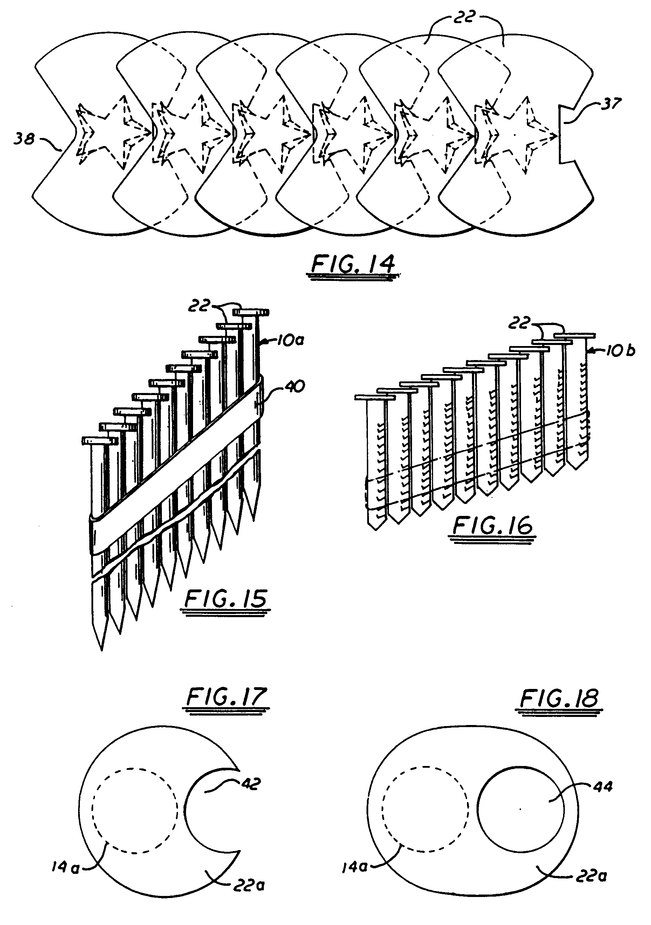

Head 22 contains on its rim 25 a cutout flat end dovetail slot 30, fishtail slot 32, or other form 34 or 37 depending on the desired design. Each slot is designed to capture two adjacent fins 18 on the shank 14 of the next adjacent fastener. In a common nail as seen in Fig. 15 the shank is held by the slot of the adjacent fastener because such slot surrounds the cross sectional counterline of the shank.

Referring to Fig. 1, the collated fastener unit 10 is formed by the slot 30 in fastener 12a capturing two adjacent fins 18 from fastener 12b, the slot in fastener 12b capturing two adjacent fins 18 from fastener 12c and so on until the slot on fastener 12k captures the two fins on fastener 121.

A notch 36 on each shank 14 juxtaposed to head 22 prevents the adjacent fasteners from sliding apart. However, the notch 36 is overcome by the force of an automatic hammer gun striking head 22 so that the fasteners 12 can be released in order from 12a to 121 in response to the action of the automatic hammer gun.

Alternate designs to the head 22 are shown in Fig. 14. In this embodiment a second notch 38 is cut out of head 22 for use in providing closer spacing between shanks of a large headed fastener. This facilitates driving of the fastener over the centerline of the shank.

The collated strip 10 can contain a band 40 for ease of transportation or can be lightly glued together. However, this is not necessary for the use of the collated strip 10.

As shown in Fig. 1, the collated strip 10 containing fasteners 12a to 121 will have each end point 24 slightly above the adjacent forward facing fastener so that the bottom strip 10 will form an acute angle with a flat surface below the strip 10. The fastener at the lower level will be struck first on its head to disengage from the collated strip.

Although shank 14 is usually centered below the head 22 of each fastener as seen in Figs. 2, 3, 6 and 14, it is not necessary to maintain such a configuration. As seen in Fig. 17, the shank 14a is offset from the center of head 22a. In like manner, shank 14a in Fig. 18 is offset from the center of head 22a. Moreover, the opening 44 can be substituted for slot 42 as an alternate fastener head configuration.

As seen in Fig. 15, even common smooth shank nails can be employed in this invention as unit 10a as long as the slot enclosing the adjacent shank surrounds at least the cross sectional centerline of that shank. Roofing nails as seen in Fig. 16 also can be formed into a collated strip 10b according to this invention by forming each nail in the manner of the fastener shown in Figs. 4 and 5.

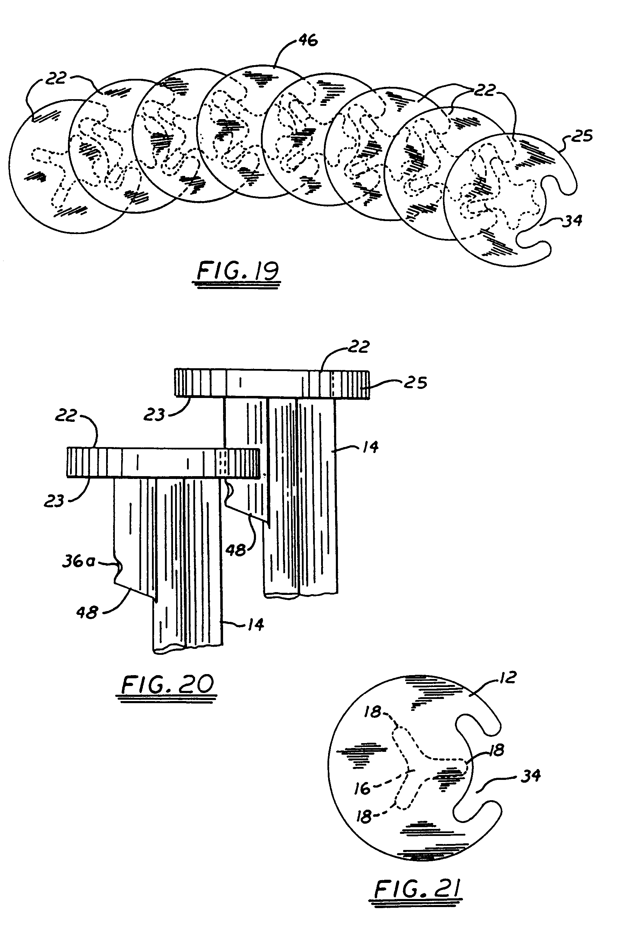

Fasteners such as roofing nails seen in Fig. 19 can form a coil 46 which can be employed in nail guns designed to handle such a configuration.

A quick fall away plane 48 can be utilized in shank 14 as seen in Fig. 20 so that when the adjacent fastener is disengaged from notch 36a by the fastener hammer gun action, it easily falls away from its adjacent fastener.

No quick fall away plane 48 is present in the alternative embodiment of fig. 21, all three fins 18 being the same size. However, the roofing nail of fig 21 may be coiled and used in substantially the same manner as the roofing nails of fig 19.

## Claims

1. A plurality of fasteners (12) collated together in a strip (10) in a side by side relationship for use in a fastener tool, each fastener comprising:
   (a) an elongated shank (14) having a flat head (22) at a first end (19) and a point (24) at a second end (21),
   (b) an annular edge (20) circumscribing the flat head (22) with at least one cut out on the edge (20) **characterized** in that said cut out is in the form of a slot (30, 32, 34, 37) being of a depth and width sufficient to capture the shank (14) of an adjacent fastener (12) to prevent the adjacent fastener (12) from disengaging from its side by side relationship until a force is exerted on the head (22) of a fastener (12a) positioned at the lowest level in the collated strip (10).

2. The collated fasteners according to claim 1 wherein a notch (36) on the shank (14) is juxtaposed to the head to engage a back portion of the slot (30, 32, 34, 37) on an adjacent fastener (12) and prevent the fastener from sliding with respect to its adjacent fastener.

3. The collated fasteners according to claim 1, wherein

(a) an elongated central core (16) between said first (19) and second (21) end having at least three radial fins (18) tapering outwardly from the core (16) to an outer rounded edge (20), and

(b) two adjacent fins (18) captured by the slot (30, 32, 34, 37) in the head (22) of an adjacent fastener (12) in the collated side by side relationship.

4. A collated fastener according to claim 3 wherein there are five radial fins (18) tapering outwardly from the core (16) on each fastener (12).

5. A collated fastener according to claim 4 wherein there is a notch (36) juxtaposed to the head (22) on the two adjacent fins (18) of each fastener captured by the slot in the head (22) of an adjacent fastener (12).

6. The collated fasteners according to claim 3 wherein a space between two adjacent radial fins (18) on each fastener forms a cup (26) and a bottom of the cup contains at least one serration (28).

7. The collated fasteners according to claim 3 wherein the fasteners (12) are roofing nails.

8. The collated fasteners according to claim 5 wherein the shank (14) has an angled fall away plane (48) below each notch.

9. The collated fasteners according to claim 1, wherein

(a) said elongated shank (14) is star shaped in cross section, with the star having five outer edges (20), and

(b) two adjacent edges (20) in the star captured by the slot (30, 32, 34, 37) in the head of an adjacent fastener (12) in the side by side relationship.

10. The collated fasteners according to claim 1, 3 or 9 wherein the shank (14) is centered in a bottom of the flat head (22) in each fastener (12).

11. The collated fasteners according to claim 1, 3 or 9 wherein the shank (14, 14a) is offset with respect to the center in a bottom of the flat head (22, 22a) in each fastener (12).

12. The collated fasteners according to claim 9 wherein the fasteners (12) are large headed nails.

13. The collated fasteners according to claim 1, 5, 7, 9 or 12 wherein there is one cut slot (30) on the edge of each head (22) in the form of a dovetail.

14. The collated fasteners according to claim 1, 5, 7, 9 or 12 wherein there is one cut out slot (32) on the edge of each head (22) in the form of a fishtail.

15. The collated fasteners according to claim 7 or 12 wherein there are two cut out slots (30) on the edge of each head (22).

**Patentansprüche**

1. Eine Vielzahl von Befestigungselementen (12), zusammengestellt in einem Streifen (1Ø) in einer Seite-an-Seite-Anordnung für die Verwendung in einem Befestigungswerkzeug, wobei jedes Befestigungselement aufweist:

a) einen länglichen Schaft (14) mit einem flachen Kopf (22) an einem ersten Ende (19) und einer Spitze (24) an einem zweiten Ende (21),

b) eine ringförmige Kante (20), die den flachen Kopf (22) mit zumindest einem Ausschnitt an der Kante (2Ø) umschreibt, dadurch gekennzeichnet, daß besagter Ausschnitt die Form eines Schlitzes (3Ø, 32, 34, 37) mit einer Tiefe und Breite hat, die zur Aufnahme des Schaftes (14) eines benachbarten Befestigungselements (12) ausreichend ist, um das benachbarte Befestigungselement (12) daran zu hindern, sich von seiner Seite-an-Seite-Anordnung zu lösen, bis eine Kraft auf den Kopf (22) eines Befestigungselements (12a) ausgeübt wird, welches sich in dem zusammengestellten Streifen (1Ø) auf dem niedrigsten Niveau befindet.

2. Die zusammengestellten Befestigungselemente nach Anspruch 1, bei denen an dem Schaft (14) neben dem Kopf eine Ausnehmung (36) angeordnet ist, um einen Hinterabschnitt des Schlitzes (3Ø, 32, 34, 37) eines benachbarten Befestigungselementes (12) in Eingriff zu bringen und das Befestigungselement vor dem Abrutschen in Bezug auf das benachbarte Befestigungselement zu bewahren.

3. Die zusammengestellten Befestigungselemente nach Anspruch 1, bei denen

a) ein länglicher Zentralkern (16) zwischen besagtem ersten (19) und zweiten (21) Ende mit zumindest drei radialen Rippen (18) vorgesehen ist, die konisch nach außen von dem Kern (16) zu einer äußeren gerundeten Kante (2Ø) zulaufen, und

b) zwei benachbarte Rippen (18) durch den Schlitz (3Ø, 32, 34, 37) in dem Kopf (22) eines benachbarten Befestigungselements (12) in der zusammengestellten Seite-an-Seite-Anordnung aufgenommen ist.

4. Ein zusammengestelltes Befestigungslement nach Anspruch 3, bei dem es fünf radiale Rippen (18) gibt, die von einem Kern (16) an jedem Befestigungselement (12) konisch nach außen zulaufen.

5. Ein zusammengestelltes Befestigungselement nach Anspruch 4, bei dem es eine Ausnehmung (36) gibt, die neben dem Kopf (22) an zwei benachbarten Rippen (18) jedes Befestigungselements angeordnet ist und durch den Schlitz in dem Kopf (22) eines benachbarten Befestigungselements 12) aufgenommen ist.

6. Die zusammengestellten Befestigungselemente nach Anspruch 3, bei denen ein Freiraum zwischen zwei benachbarten radialen Rippen (18) an jedem Befestigungselement eine Pfanne (26) bildet und bei dem ein Boden der Pfanne zumindest einen Einschnitt (28) enthält.

7. Die zusammengestellten Befestigungselemente nach Anspruch 3, wobei die Befestigungselemente (12) Dachnägel sind.

8. Die zusammengestellten Befestigungselemente nach Anspruch 5, wobei der Schaft (14) unterhalb jeder Ausnehmung eine abgewinkelte, abfallende Ebene (48) hat.

9. Die zusammengestellten Befestigungselemente nach Anspruch 1, bei denen

a) besagter länglicher Schaft (14) im Querschnitt sternförmig ist, wobei der Stern fünf Außenkanten (20) hat, und

b) zwei benachbarte Kanten (20) in dem Stern durch den Schlitz (30, 32, 34, 37) in dem Kopf eines benachbarten Befestigungselements (12) in einer Seite-an-Seite-Anordnung aufgenommen sind.

10. Die zusammengestellten Befestigungselemente nach den Ansprüchen 1, 3 oder 9, bei denen der Schaft (14) in einem Boden des flachen Kopfes (22) in jedem Befestigungselement zentriert ist.

11. Die zusammengestellten Befestigungselemente nach den Ansprüchen 1, 3 oder 9, bei denen der Schaft (14, 14a) in jedem Befestigungselement (12) gegenüber der Mitte in einem Boden des flachen Kopfes (22, 22a) versetzt ist.

12. Die zusammengestellten Befestigungselemente nach Anspruch 9, bei denen die Befestigungselemente (12) breitköpfige Nägel sind.

13. Die zusammengestellten Befestigungselemente nach den Ansprüchen 1, 5, 7, 9 oder 12, bei denen es in der Kante jedes Kopfes einen ausgeschnittenen Schlitz (30) in der Form eines Schwalbenschwanzes gibt.

14. Die zusammengestellten Befestigungselemente nach den Ansprüchen 1, 5, 7, 9 oder 12, bei denen es in der Kante jedes Kopfes (22) einen ausgeschnittenen Schlitz (32) in der Form eines Fischschwanzes gibt.

15. Die zusammengestellten Befestigungselenente nach den Ansprüchen 7 oder 12, bei denen es in der Kante jedes Kopfes (22) zwei ausgeschnittene Schlitze (30) gibt.

**Revendications**

1. Multitude d'attaches (12) réunies dans une bande (10) en étant côte à côte pour emploi dans un outil pour attaches, chaque attache comprenant :

(a) une queue allongée (14) présentant une tête plate (22) à une première extrémité (19) et une pointe (24) à une seconde extrémité (21),

(b) un bord annulaire (20) entourant la tête plate (22), au moins une découpe étant pratiquée sur le bord (20), caractérisée en ce que ladite découpe a la forme d'une fente (30, 32, 34, 37) d'une profondeur et d'une largeur suffisantes pour emprisonner la queue (14) d'une attache adjacente (12) afin d'éviter que cette attache adjacente (12) ne se désengage de sa relation côte à côte jusqu'à ce qu'une force soit exercée sur la tête (22) d'une attache (12a) placée au niveau le plus bas dans la bande de réunion (10).

2. Attaches réunies selon la revendication 1, où une encoche (36) sur la queue (14) est juxtaposée à la tête pour s'engager dans une partie arrière de la fente (30, 32, 34, 37) d'une attache adjacente (12) et éviter que l'attache ne glisse par rapport à son attache adjacente.

3. Attaches réunies selon la revendication 1, où :

(a) un noyau central allongé (16) entre lesdites première (19) et seconde (21) extrémités présente au moins trois ailettes radiales (18) allant en se rétrécissant vers l'extérieur entre le noyau (16) et un bord extérieur arrondi (20); et

(b) deux ailettes adjacentes (18) sont emprisonnées dans la fente (30, 32, 34, 37) de la tête (22) d'une attache adjacente (12) dans la relation côte à côte de réunion.

4. Attaches réunies selon la revendication 3, où il y a cinq ailettes radiales (18) allant en se rétrécissant à partir du noyau (16) sur chaque attache (12).

5. Attaches réunies selon la revendication 4, où il y a une encoche (36) juxtaposée à la tête (22) sur les deux ailettes adjacentes (18) de chaque attache emprisonnée par la fente dans la tête (22) d'une attache adjacente (12).

6. Attaches réunies selon la revendication 3, où un espace entre deux ailettes radiales adjacentes (18) sur chaque attache forme une coupe (26) et le fond de la coupe contient au moins une dentelure (28).

7. Attaches réunies selon la revendication 3, où les attaches (12) sont des clous pour toiture.

8. Attaches réunies selon la revendication 5, où la queue (14) présente un plan tombé incliné (48) au-dessous de chaque encoche.

9. Attaches réunies selon la revendication 1, où :

(a) ladite queue allongée (14) a la forme d'une étoile dans une section transversale, l'étoile présentant cinq bords extérieurs (20), et

(b) deux bords adjacents (20) de l'étoile sont emprisonnés par la fente (30, 32, 34, 37) dans la tête d'une attache adjacente (12) dans la relation côte à côte.

10. Attaches réunies selon la revendication 1, 3 ou 9, où la queue (14) est centrée dans le fond de la tête plate (22) dans chaque attache (12).

11. Attaches réunies selon la revendication 1, 3 ou 9, où la queue (14, 14a) est décalée par rapport au centre dans le fond de la tête plate (22, 22a) dans chaque attache (12).

12. Attaches réunies selon la revendication 9, où les attaches (12) sont de gros clous à tête.

13. Attaches réunies selon la revendication 1, 5, 7, 9 ou 12, où il y a une fente (30) découpée sur le bord de chaque tête (22) sous forme de queue d'aronde.

14. Attaches réunies selon la revendication 1, 5, 7, 9 ou 12, où il y a une fente (32) découpée sur le bord de chaque tête (32) sous forme de queue de poisson.

15. Attaches réunies selon la revendication 7 ou 12, où il y a deux fentes (30) découpées sur le bord de chaque tête (22).

FIG. 1

FIG. 4

FIG. 5

FIG. 2

FIG. 3

FIG. 6

FIG. 7

FIG. 8

FIG. 9

FIG. 10

FIG. 11

FIG. 13

FIG. 12

8

_FIG. 14_

_FIG. 15_

_FIG. 16_

_FIG. 17_

_FIG. 18_

_FIG. 19_

_FIG. 20_

_FIG. 21_